# EUROPEAN PATENT APPLICATION

(11) **EP 1 537 779 A2**
(43) Date of publication of application: **08.06.2005**
(21) Application number: 04257554.8
(22) Date of filing: 03.12.2004
(51) Int. Cl.: A01K 87/06

(54) **A reel seat assembly**

(30) Priority: 05.12.2003 GB 0328276
(71) Applicant: FOX INTERNATIONAL GROUP LIMITED, Hainault, Essex IG6 3UT (GB)
(72) Inventor: Cottis, Maxwell Stewart, Braintree, Essex CM7 9FD (GB)
(74) Representative: Crouch, David John

(57) **Abstract**

A reel seat assembly (10) for releasably retaining an attachment portion of an angling reel when the assembly is in use. The reel seat assembly (10) comprises a rod portion (12), a first retaining part (20) and a second retaining part (24) both mounted on the rod portion (12). It further comprises an internally screw-threaded ring (28) extending around the rod portion (12) and coupled to the second retaining part (24), and a series of substantially transverse generally parallel ridges (22) on the rod portion (12) extending around only a part thereof. The ridges (22) are eccentric viewing the rod portion (12) in cross-section, by virtue of their extending around only a part of the rod portion (12). They lie on respective parts of a helical path defined by the internal screw-threading of the ring (28) so that the latter engages the ridges (22) to enable rotation of the ring (28) to effect longitudinal movement thereof along the rod portion (12), in one sense to increase the spacing between the first and second retaining parts (20, 24) to enable such an attachment portion of an angling reel to be positioned between them, and in the opposite sense to decrease the spacing between the first and second retaining parts (20, 24) thereby to retain such an attachment portion between them. Subsequent rotation of the ring (28) in the said one sense enables the attachment portion to be released.

## Description

The present invention relates to an adjustable reel seat assembly for securing a reel to a fishing rod.

Fishing reel seats have long been used for attaching reels to fishing rods. The reel comprises an attachment part which is held to the rod by means of a seat assembly. The latter comprises two parts, the first being fixed in position relative to the rod and retaining a front portion of the attachment part, and the second part being movable along the rod towards and away from the fixed part and retaining a rear portion of the attachment part. Such movement is effected by an internal screw-thread of a ring engaging a corresponding external screw-thread around the outside of a portion of the rod.

A disadvantage of such a construction is that the screw-thread on a portion of the rod is unsightly and may easily become fouled by dirt.

The present invention seeks to provide a remedy.

Accordingly, the present invention is directed to a reel seat assembly for releasably retaining an attachment portion of an angling reel when the assembly is in use, the reel seat assembly comprising a rod portion, a first retaining part and a second retaining part both mounted on the rod portion, an internally screw-threaded ring extending around the rod portion and coupled to the second retaining part, and a series of substantially transverse generally parallel ridges on the rod portion extending around only a part thereof, the said ridges being eccentric viewing the rod portion in cross-section, by virtue of their extending around only a part of the rod portion, and lying on respective parts of a helical path defined by the internal screw-threading of the ring so that the latter engages the ridges to enable rotation of the ring to effect longitudinal movement thereof along the rod portion, in one sense to increase the spacing between the first and second retaining parts to enable such an attachment portion of an angling reel to be positioned between them, and in the opposite sense to decrease the spacing between the first and second retaining parts thereby to retain such an attachment portion between them, subsequent rotation of the ring in the said one sense enabling the attachment portion to be released.

Preferably, the rod portion has a flat surface immediately to one side of the said ridges. This reduces friction between the ring and the rod portion, and provides a means to inhibit the said second retaining part from rotating with the ring during adjustment.

This is even more so if the rod portion has two flat surfaces immediately to the two opposite sides of the ridges respectively.

The present invention extends to an angling rod having a reel seat assembly in accordance with the present invention.

An example of a reel seat assembly embodying the present invention will now be described with reference to the accompanying drawings, in which:
- Figure 1: is an axial sectional view of such a reel seat assembly;
- Figure 2: is a top view of the assembly shown in Figure 1;
- Figures 3 and 4: are respective cross-sectional views on a larger scale of the assembly shown in Figures 1 and 2 taken in the planes indicated at the lines III-III and IV-IV respectively shown in Figure 1; and
- Figure 5: is an axial sectional view of the assembly shown in Figures 1 and 2 taken in the plane indicated by a line V-V shown in Figure 1.

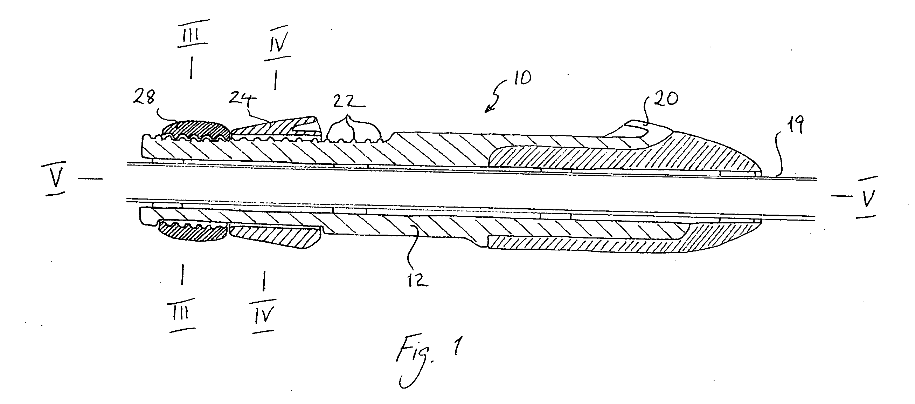

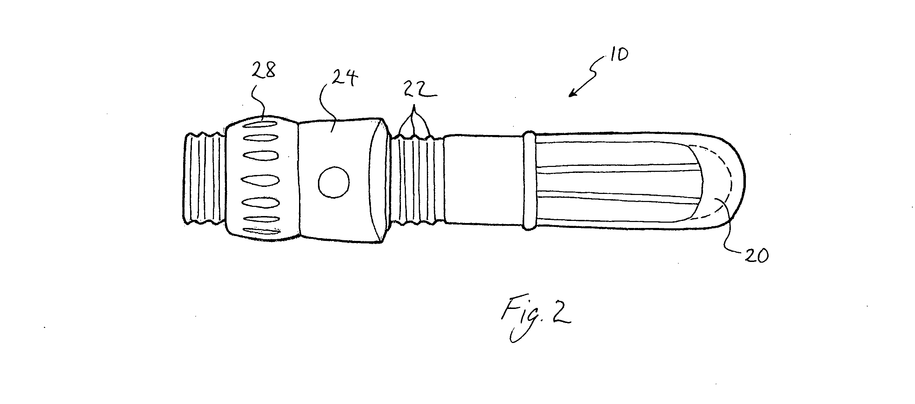

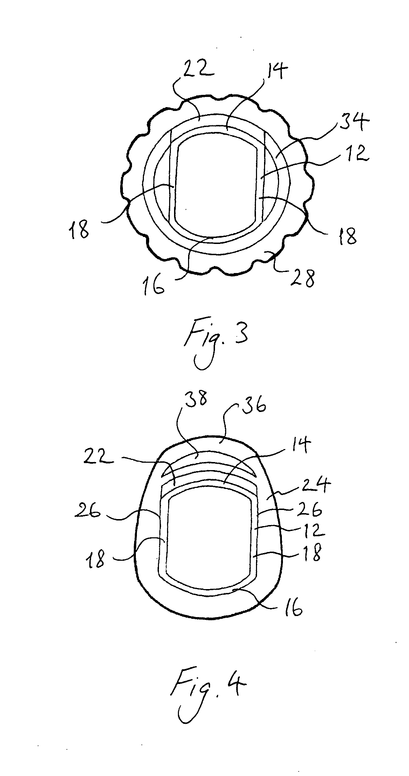

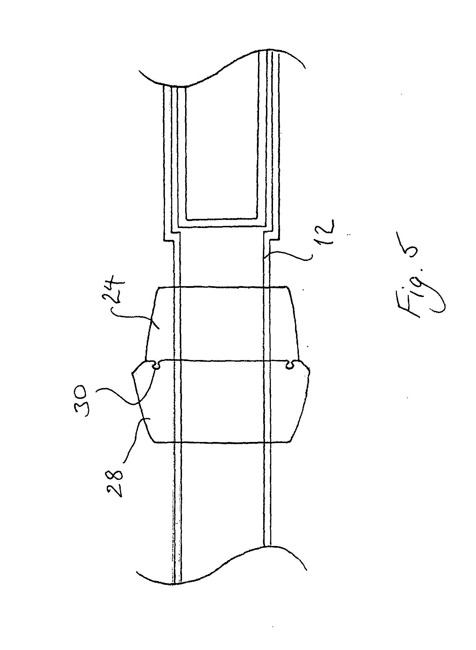

Figures 1 to 5 show a reel seat assembly 10 comprising a tubular plastics body 12 having, as viewed in section as in Figures 3 and 4, an arcuate top 14 and bottom 16 both with the same radius of curvature, and flat sides 18. The tubular body 12 surrounds and is secured to part of an angling rod 19 and has secured onto it a fixed front retaining part 20 in the form of a curved loop. A series of transverse parallel ridges 22 protrude from a top 14 of the tubular body 12. Thus the ridges 22 are eccentric relative to the tubular body 12.

A rear retaining part 24 in the form of a sleeve which surrounds the tubular body 12 is free to slide therealong, but is restrained from rotating relative to the body 12 by having internal flats 26 which abut the flat sides 18 of the tubular body 12.

The rear retaining part 24 is coupled to a rotatable ring 28 which extends around the tubular body 12. The coupling is effected by interengaging annular rings 30. The inner surface 32 of the rotatable ring 28 is formed with an internal screw-thread 34 of the same pitch as the ridges 22. This allows the ridges 22 to interengage with the said screw-thread 34, enabling movement of the rear retaining part 24 along the tubular body 12 by rotation of the ring 28. Thus the ridges 22 lie on respective parts of the helical path defined by the screw-thread 34.

The ridges 22 are eccentric to the tubular body 12 and so do not continue around the full circumference thereof. The ends of the ridges 22 are flush with the outside surfaces of the flat sides 18.

The rear retaining part 24 is provided with a hood 36 defining a hollow 38 above the ridges 22 to receive a rear end of an attachment part (not shown) of a reel.

The front end of an elongate attachment part of a reel (not shown) is inserted into the loop of the front retaining part 20. The rear retaining part 24 is then moved towards the front retaining part 20 by rotation of the ring 28 until the rear end of such an attachment part is held within the hollow 38 of the rear retaining part 24. This movement is continued to secure the reel attachment part (not shown) tightly in place. It will be appreciated that the attachment part (not shown) now covers many of the ridges 22.

Rotation of the ring 28 in the opposite sense, to move the front and rear retaining parts 20 and 24 further apart, enables to reel (not shown) to be released.

Numerous variations and modifications to the illustrated reel seat assembly may occur to the reader without taking the device outside the present invention.

For example, a central elongate longitudinal groove may be formed through the ridges 22 to be engaged by and internal protuberance on the rear retaining part 24 to prevent rotation of that part, instead of the flats 18 and 26.

## Claims

1. A reel seat assembly (10) for releasably retaining an attachment portion of an angling reel when the assembly is in use, the reel seat assembly (10) comprising a rod portion (12), a first retaining part (20) and a second retaining part (24) both mounted on the rod portion (12), an internally screw-threaded ring (28) extending around the rod portion (12) and coupled to the second retaining part (24), **characterised by** a series of substantially transverse generally parallel ridges (22) on the rod portion (12) extending around only a part thereof, the said ridges (22) being eccentric viewing the rod portion (12) in cross-section, by virtue of their extending around only a part of the rod portion (12), and lying on respective parts of a helical path defined by the internal screw-threading of the ring (28) so that the latter engages the ridges (22) to enable rotation of the ring (28) to effect longitudinal movement thereof along the rod portion (12), in one sense to increase the spacing between the first and second retaining parts (20, 24) to enable such an attachment portion of an angling reel to be positioned between them, and in the opposite sense to decrease the spacing between the first and second retaining parts (20, 24) thereby to retain such an attachment portion between them, subsequent rotation of the ring (28) in the said one sense enabling the attachment portion to be released.

2. A reel seat assembly according to claim 1,
**characterised in that** the rod portion (12) has a flat surface (18) immediately to one side of the said ridges (22).

3. A reel seat assembly according to claim 2,
**characterised in that** the rod portion (12) has two flat surfaces (18) immediately to the two opposite sides of the ridges (22) respectively.

4. A combination of a rod and a rod seat assembly as claimed in any preceding claim.
